# EUROPEAN PATENT SPECIFICATION

(11) **EP 3 021 680 B1**
(45) Date of publication and mention of the grant of the patent: **05.12.2018**
(21) Application number: 14747541.2
(22) Date of filing: 17.07.2014
(51) Int. Cl.: A23G 1/54, A23G 3/34, A23G 3/46, A23G 3/56

(54) **LOLLIPOP AND MANUFACTURING PROCESS THEREOF**
LUTSCHER UND HERSTELLUNGSVERFAHREN DAFÜR
SUCETTE ET SON PROCESSUS DE FABRICATION

(30) Priority: 19.07.2013 IT MI20131220
(43) Date of publication of application: 25.05.2016
(73) Proprietor: Perfetti Van Melle S.p.A., 20020 Lainate (Milano) (IT)
(72) Inventor: BOTTINI, Alessandro, I-20020 Lainate (MI) (IT); CAPELLETTI, Claudia, I-20020 Lainate (MI) (IT)
(74) Representative: Bianchetti Bracco Minoja S.r.l.
(86) International application number: PCT/EP2014/065438
(87) International publication number: WO 2015/007867

(56) References cited:
- WO-A2-2008/152626
- GB-A- 2 229 347
- "Eclairs Pops", , July 2011 (2011-07), XP055114730, Retrieved from the Internet: URL:http://www.gnpd.com/sinatra/recordpage /1571302/ [retrieved on 2014-04-22]
- "Lollipop chupa chups", , July 2007 (2007-07), XP055114737, Retrieved from the Internet: URL:http://www.gnpd.com/sinatra/recordpage /747300 [retrieved on 2014-04-22]
- Alikonins J.J.: "Candy Technology", 1980, AVI, Westport, US * page 155 - page 157 *
- SOUCI ET AL: "food composition and nutrition tables, Dairy products", 1 January 2000 (2000-01-01), FOOD COMPOSITION AND NUTRITION TABLES = DIE ZUSAMMENSETZUNG DER LEBENSMITTEL, NÄHRWERT-TABELLEN = LA COMPOSITION DES ALIMENTS, TABLEAUX DES VALEURS NUTRITIVES, MEDPHARM SCIENTIFIC PUBLISHERS, STUTTGART, GERMANY, PAGE(S) 1 - 71, XP002488783, ISBN: 978-3-88763-076-8 * page 31 - page 32 *

## Description

The present invention relates to lollipops, namely candies on a stick as defined in the claims, characterised in that the edible portion comprises a toffee obtained by depositing.

### Prior art

A type of soft candy called "toffee" or "taffy" in technical jargon is well known. This type of candy is characterised by a soft mouthfeel. Its ingredients include a certain quantity of fatty substance, together with common sweeteners such as sugar and glucose syrup. The toffees on the market include those sold under the "Fruittella" brand.

The process mainly used in toffee manufacture comprises the steps of cooking, seeding, processing with a pasta machine, rolling, pulling, moulding and cooling. The resulting candies are therefore moulded.

Moulded toffees are also known which are enriched with a filling made of chocolate or a compound chocolate. Candies of this type are available on the market under the generic name of eclairs.

Moulded toffees on a stick have been produced, but said manufacturing method does not allow the simultaneous insertion of a filling which is liquid at processing temperatures, such as chocolate, without giving rise to quality problems. Alternatively, hard candies on a stick, filled with chocolate, are disclosed in WO2012007471, filed by the Applicant. Similar moulded toffees are also commercially available under the brands chupa chups Max choco lollipops or Eclairs pops, both produced by Cadbury.

An alternative manufacturing method, which offers some financial advantages, is depositing. Deposited toffee, filled with chocolate or other fillings, is marketed, for example, by Arcor (Argentina) under the name "butter toffees".

Deposited toffees on a stick are not known. Moreover, filled deposited toffees on a stick are not known.

### Description of the invention

The invention relates to a lollipop consisting of an edible portion, and an inedible portion, the edible portion comprising a deposited toffee, a second deposited edible material in addition to said toffee, forming a filling, a coating or a second region adjacent to said toffee and the inedible portion consisting of a stick, characterized by a fat content from 15% to 25% by weight of the toffee and by:- a first hard, smooth texture that allows the consumer to lick the lollipop during the first part of consumption; - a second soft texture that develops during consumption after said texture, and allows the consumer to bite and detach portions of the lollipop during the following steps of consumption.

When said confectionery products are deposited, they can be presented to consumers in different formats from those obtainable by the moulding technique, which necessarily present symmetrical convex portions around a central ring.

Depositing toffee also allows the production of candies with a particular texture, which will be described below. Finally, the inclusion of a stick has the advantage that users do not soil their hands when the edible product is removed from the wrapping.

Moreover, consumption does not necessarily have to be continuous, because the toffee can be inserted in and removed from the mouth as required, using the stick. This means that lollipops weighing more than is usual for the moulded toffees on the market can be made, with a commercial advantage. The lollipops currently on the market weigh not more than 7 grams each, whereas the lollipops according to the invention preferably have a total weight ranging between 10 g and 20 g each.

The toffee mass, after cooking and ready for use, is preferably characterised by a water content ranging from 5 to 11% by weight of toffee, more preferably 6 to 7%.

The toffee mass is characterised by a fat content ranging from 15% to 25% by weight of toffee.

The lollipop according to the invention also presents a sensory advantage for consumers, as it is characterised by a consistency or texture that varies during consumption. The stick-mounted toffee presents a first hard, smooth texture during the initial steps of consumption, which allows the lollipop to be licked. This texture is similar to that of ordinary lollipops consisting of hard candy, known under the Chupa Chups brand. However, during consumption the toffee mass gradually develops a second soft texture, which allows the lollipop to be bitten and portions therefore detached during the subsequent consumption steps.

Said change of texture is believed to be caused by a gradual increase in hydration due to the saliva that remains on the toffee portion of the lollipop during the first part of consumption, when the lollipop is licked. A partial heating effect, due to the fact that the lollipop comes into contact with the body temperature during the initial steps of consumption, can also be postulated.

Said lollipop also contains a second edible deposited material, in addition to said toffee, which forms a filling, coating or second region adjacent to said toffee.

Said second edible material is advantageously identifiable by the consumer by some characteristics which differ from those of the first material. It can therefore still consist of deposited toffee, but possess different flavours, colours and/or textures from the first material.

Alternatively, said second material can consist of a different confectionery material, such as hard candy, chewing gum, chewy candy, chocolate or compound chocolate.

The lollipop preferably contains said second edible material in the form of a filling completely surrounded by toffee.

Said filling can be a solid or fluid, characterised by its own viscosity at room temperature, and can simultaneously be characterised by lower viscosity (greater flowability) at body temperature. Said filling may optionally be even less viscous at the manufacturing temperature of the lollipop according to the invention.

Said filling therefore preferably consists of chocolate, compound chocolate, hydrated cream, fondant and combinations thereof. Known formulations of chocolate and compound chocolate, wherein all or part of the cocoa butter is replaced with vegetable fat, can be used. Hydrated creams are available, for example, from Barry Callebaut, in ready-to-use form or requiring preparation. Fondant is a well-known confectionery preparation.

When the filling consists of the materials listed as preferred, consumers distinctly experience a third sensation, in addition to the two described above relating to the deposited toffee. These confectionery materials are characterised by intense, distinctive flavours; moreover, although they are solid or highly viscous at room temperature, said materials dissolve or are creamy at body temperature, thus combining the flavour sensation with a third texture. The result is a product potentially very popular with consumers, because it provides a unique combination of multiple flavours and textures.

The stick can consist of various materials such as wood, plastic, cardboard, paper or biodegradable plastic. It can also have a variety of shapes (cylindrical, parallelepipedal), lengths and colours, and the free end can be decorated. It can also be either hollow or solid.

When the embodiment involves the insertion of a filling in the deposited toffee, the stick is preferably inserted in said toffee by over 25% of the greatest dimension of said toffee, and is simultaneously inserted in said filling by less than 50% of the greatest dimension of said filling.

Even more preferably, the stick is inserted in said filling by less than 10% of the greatest dimension of said filling.

Said positioning is advantageous to consumers, who can bite directly into the filling, thus better appreciating its flavour and texture. It also provides a filling in a more limited space, thus giving rise to a better-quality product.

Said configuration can be obtained by the manufacturing process according to the invention. It has been found that the filling can be shifted towards the end of the product opposite to the stick insertion end. In this way the stick is sufficiently immersed in the toffee portion, but not inserted far into the filling. When the process described hereby but not part of the invention is used, the filling remains surrounded by the toffee portion and does not leak from it, unlike the products according to the prior art, which requires the filling to be positioned in the centre of the matrix containing it.

The product preferably has an elongated shape associated with a principal length L (e.g. a parallelepipedal shape with the stick inserted into one of the two smaller sides). If the distance between the centre of gravity of the filling and the side opposite the stick insertion side is called d, preferably d<50% of L, in particular d<40% of L, and even more preferably d<30% of L.

The filling may partly soil the outside of the stick during the manufacturing steps, thus leading to a product perceived by consumers to be of inferior quality. Moreover, highly coloured fillings, such as chocolate or a coloured fondant, may be visible inside the stick, if hollow sticks are used as is commonly the case.

It has been found that a lollipop containing a filling does not leave traces of filling on the stick if the deposited toffee is perfectly sealed around said stick. "Perfectly sealed" means that the zone adjacent to the stick does not contain even the smallest capillaries which, by placing the exterior of the product in communication with the filling, would allow the filling to flow outwards when the temperature makes the filling fluid. This problem is particularly acute with the preferred fillings described above.

Flat sticks are preferably used, thus eliminating the problem of traces of filling visible in the transparent stick.

In the edible portion consisting of deposited toffee and the second material, the lollipop according to the invention can contain ingredients such as sugars, fats, proteins, salts or flavourings, all of animal or vegetable origin or mixtures thereof. Additives such as dyes, acidifiers, preservatives, sweeteners, coating agents, filling agents and mixtures thereof can also be present.

The lollipop according to the invention can be advantageously prepared by a (not part of the invention) that comprises the following steps:
a) providing a cooked, fluid toffee mass;
b) providing a plurality of sticks;
c) depositing a pre-determined quantity of the mass referred to in step a) for a period ranging from starting time tₐ=0 (s) to finishing time tₐ=θ, in at least one cavity of a mould and over a portion of at least one stick;
d) cooling the mass deposited in the mould;
e) ejecting the deposited mass from the mould without deforming said mass.

It has been found that when the process just described is used, the toffee mass adheres strongly to the stick, with the advantage of preventing undesirable detachment during consumption, which would reduce the quality of the product. Depositing the toffee over a portion of the stick gives rise to this advantage. In the traditional method of manufacturing lollipops by moulding, a plastic mass is obtained first, by contrast with the liquid mass of toffee, and a stick is inserted immediately after moulding by forcing it through the formed piece. An adhesive fluid mass such as the toffee mass referred to in step a) can envelop and adhere particularly well around the stick.

A lollipop including the toffee portion obtained in this way also presents during consumption the characteristic of transition from a first hard texture to a second softer texture.

Cooling in moulds means that pieces weighing between 10 g and 20 g retain their shape until they acquire a sufficient consistency to be self-supporting. Pieces of such a weight would deform if introduced into a cooling tunnel immediately after moulding.

Finally, depositing toffee in moulds allows industrial manufacture of different shapes for the edible portion of the lollipop than those allowed by the moulding process.

Shapes comprising flat surfaces such as a rectangular parallelepiped, pyramidal frustum, longitudinally sliced part of a cone and combinations thereof are particularly preferred for the edible portion.

Complex figures can also be obtained by using suitably shaped moulds. Figures that reproduce the human figure, animals, cartoon characters and mascots are particularly preferred. These figures can be asymmetrical.

Said preferred embodiments, made by the process hereby described, help to make the lollipop clearly distinguishable from other toffee products.

It is preferable for the toffee mass referred to in step a) to be characterised by a water content ranging from 5 to 11%, and prepared by continuous cooking of a liquid composition characterised by a water content exceeding 11%.

It has been found that said moisture interval present in the toffee mass is associated with the particular texture of the product, which ranges from hard to soft during consumption, as described above.

Moreover, the shelf life of the product is longer than that of conventional products with a higher moisture content.

In order to keep the mass correctly fluid, it is preferable for it to be maintained, from cooking to depositing, at a temperature ranging between 90°C and 130°C.

The toffee mass is deposited, in step c), in at least one mould cavity over a portion of at least one stick. In other words the mass is deposited in at least one cavity, and at least one lollipop is made per depositing step. However, it is convenient for each mould to contain a plurality of cavities, and each cavity is preferably associated with a stick. The mass used in step a) is preferably deposited during step c) in a plurality of cavities simultaneously, over the associated sticks, simultaneously generating a plurality of lollipops. Alternatively, each cavity can be associated with a plurality of sticks, such as two sticks, and can be shaped to allow the lollipops to be separated.

The absence of the conventional steps of processing with a pasta machine and seeding with sugar crystals also increases the firmness with which the toffee adheres to the stick, thus preventing the unintentional detachment of the product mass from the stick which is associated with low-quality products.

The process preferably also includes the following steps:
f) simultaneously with step a), providing a second mass consisting of a second confectionery product;
g) depositing the second mass f) for a time ranging from starting time t_{f}>0 (s) to finishing time t_{f}<θ in the same mould cavity as referred to in step c).

The use of a finishing time t_{f}<(8/10)θ at step g) is particularly preferred.

Qualitatively better results are obtained by regulating the temperatures of the masses during depositing so that mass f) is deposited at a temperature ranging between 30°C and 50°C and mass a) at a temperature ranging between 90°C and 130°C.

Cooling d) takes place in a tunnel at controlled temperature and humidity for a time sufficient to transform the deposited mass from fluid to self-supporting. The mass is preferably solid at the end of cooling step d); however, the pieces may only be solid in the outer portion, while the inner portion remains highly viscous, but still not perfectly self-supporting.

In particular, if the lollipop is deposited in the preferred weight interval of 10 g to 20 g, and in particular from 14 g to 20 g, the inner layers can still be partly fluid at the end of step d). In such case, the lollipops must be ejected from the mould cavities with particular care to ensure that they are not deformed. Although any means can be used to eject the lollipops from the cavities, it is therefore preferable to use suction cups, deformable moulds, vibrations and combinations thereof.

Suction cups are coupled to a mechanical arm which conveys them to the product in the mould in a horizontal position, until they are just touching the lollipop. When the vacuum is applied, the lollipop adheres to the suction cups; the mechanical arm then lifts the suction cups with the lollipop and moves until the lollipop is positioned, for example, on a conveyor belt or table. At this point the vacuum is released and the lollipop detaches from the suction cups. The lollipop is then conveyed to any other steps such as packaging, while the suction cups return to pick up another lollipop.

Ejection by vibration and deformable moulds require the moulds to be first rotated through 180°, so that the cavities face downwards.

The application of vibrations, which can be transmitted by mechanical means or through waves such as ultrasound, imperceptibly detaches the lollipop from the cavity surface, and gravity causes it to fall downwards. The lollipop is picked up, usually onto a conveyor belt, and sent for the subsequent processing steps.

Deformable moulds, usually made of a rubber material, are conveyed to projections, for example by traversing on rollers, so that the cavities are squeezed, thus reducing their concavity. In this way the lollipop is ejected by exerting gradual pressure on an entire surface, until gravity again causes them to fall. The lollipop is then picked up and conveyed as described to the subsequent steps, such as packaging and sale.

### Examples

### Examples 1 and 2

The percentage and weight compositions per piece of a toffee composition according to the prior art (example 1) and according to the invention (example 2) are set out below.

The toffee according to example 1 is moulded into 20 g diamond shapes.

The toffee according to example 2 (invention) is deposited and combined with a stick. The total weight of the edible portion of example 2 is also 20 g.

| **Ingredients** | **Example 1 - reference** | | **Example 2 - invention** | |
|---|---|---|---|---|
| **Toffee** | % | g per 20 g piece | % | g per 20 g piece |
| Sugar | 30.000 | 0.600 | 30.000 | 0.600 |
| Glucose syrup (solids) | 33.000 | 0.740 | 28.500 | 0.570 |
| Cooking salt | 1.000 | 0.020 | 1.000 | 0.020 |
| Powdered milk (25% fats) | 12.000 | 0.240 | 15.000 | 0.300 |
| Emulsifiers | 0.900 | 0.018 | 0.900 | 0.018 |
| Butter | 10.000 | 0.200 | 18.000 | 0.360 |
| Sugar crystals for seeding | 1.000 | 0.020 | --- | --- |
| Flavourings | 0.100 | 0.002 | 0.100 | 0.002 |
| **Water** | **12.000** | **0.160** | **6.500** | **0.130** |
| Total | 100.000 | 2.000 | 100.000 | 2.000 |
| ***Total fat*** | ***13.00*** | | ***21.75*** | |

### Examples 3 and 4

Examples 3 (reference) and 4 (invention) illustrate the composition and manufacturing process of two toffees filled with compound chocolate.

| **Ingredients** | **Example 3 - reference** | | **Example 4 - invention** | |
|---|---|---|---|---|
| | % | g per 20 g piece | % | g per 20 g piece |
| Composition example 1 - ref. | 90.000 | 18.000 | | |
| Composition example 2 - inv. | | | 85.000 | 17.000 |
| Compound chocolate (filling) | 10.000 | 2.000 | 15.000 | 3.000 |
| | | | | |
| **Total** | 100.000 | 20.000 | 100 | 20.000 |

| **Manufacturing process** | | | | |
|---|---|---|---|---|
| **Example 3 - reference** | **Example 4 - invention** | | | |
| **Step** | **Step** | | | |
| Prepare a cooked mass of toffee at the temperature of 110°C-130°C | Prepare a cooked mass of toffee at the temperature of 110°C-130°C | | | |
| Cool mass to 50°C | | | | |
| Seed toffee mass | | | | |
| Process toffee mass with a pasta machine | | | | |
| Roll out toffee mass | | | | |
| Prepare hot, fluid compound chocolate at 30°C-50°C | Prepare hot, fluid compound chocolate at 30°C-50°C | | | |
| Pull a rope from the mass being rolled while the compound chocolate is being pumped in Calibrate filled rope | Prepare moulds with sticks | | | |
| Mould rope into pieces | Pour the toffee and the compound chocolate filling simultaneously into moulds | | | |
| Cool | Cool | | | |
| | Remove from moulds | | | |
| Package | Package | | | |
| Total number of steps | Total number of steps | | | |
| 12 | 8 | | | |

The process of obtaining the product according to the prior art (example 3) requires a large number of steps, including the step of processing the mass with a pasta machine, which is particularly long and energy-intensive.

## Claims

1. Lollipop consisting of an edible portion, and an inedible portion, the edible portion comprising a deposited toffee, a second deposited edible material in addition to said toffee, forming a filling, a coating or a second region adjacent to said toffee and the inedible portion consisting of a stick, **characterized by** a fat content from 15% to 25% by weight of the toffee and by:
- a first hard, smooth texture that allows the consumer to lick the lollipop during the first part of consumption;
- a second soft texture that develops during consumption after said texture, and allows the consumer to bite and detach portions of the lollipop during the following steps of consumption.

2. Lollipop according to claim 1 wherein said filling is completely contained within said toffee.

3. Lollipop according to claim 2 wherein said stick is positioned inside said toffee for more than 25% of the main dimension of said toffee and at the same time is positioned inside said filling for less than 50% of the main dimension of the filling.

4. Lollipop according to claim 3 wherein said stick is positioned inside said filling for less than 10% of the main dimension of the filling.

5. Lollipop according to any of the preceding claims wherein said stick is a solid stick.

6. Lollipop according to any of the preceding claims wherein said toffee is **characterized by** a water content from 5% to 11% by weight of the toffee.

7. Lollipop according to claim 1 wherein said filling consists of: chocolate, chocolate compound, hydrated cream, fondant and combinations thereof.

8. Lollipop according to any of the preceding claims wherein the total weight ranges from 10 g to 20 g.

## Patentansprüche

1. Ein Lutscher bestehend aus einem essbaren Teil und einem nicht essbaren Teil, wobei der essbare Teil ein aufgebrachtes Toffee, ein zweites aufgebrachtes essbares Material zusätzlich zu dem Toffee, welches eine Füllung, eine Beschichtung oder einen zweiten Bereich neben dem Toffee bildet, und wobei der nicht essbare Teil aus einem Stiel besteht, **gekennzeichnet durch** einen Fettgehalt von 15 Gew.-% bis 25 Gew.-% des Toffees und **durch**:
- eine erste, harte, glatte Textur, welche es dem Verbraucher ermöglicht den Lutscher während des ersten Teils des Verzehrs zu lutschen;
- eine zweite, weiche Textur, welche sich während des Verzehrs nach der Textur entwickelt, und es dem Verbraucher ermöglicht, während der folgenden Schritte des Verzehrs Teile des Lutschers zu beißen und abzulösen.

2. Lutscher gemäß Anspruch 1, wobei die Füllung vollständig innerhalb des Toffees enthalten ist.

3. Lutscher gemäß Anspruch 2, wobei sich der Stiel innerhalb des Toffees für mehr als 25% der Hauptabmessung des Toffees befindet und sich gleichzeitig innerhalb der Füllung für weniger als 50% der Hauptabmessung der Füllung befindet.

4. Lutscher gemäß Anspruch 3, wobei der Stiel innerhalb der Füllung für weniger als 10% der Hauptabmessung der Füllung positioniert ist.

5. Lutscher gemäß einem der vorhergehenden Ansprüche, wobei der Stiel ein fester Stiel ist.

6. Lutscher gemäß einem der vorhergehenden Ansprüche, wobei das Toffee durch einen Wassergehalt von 5 Gew.-% bis 11 Gew.-% des Toffees gekennzeichnet ist.

7. Lutscher gemäß Anspruch 1, wobei die Füllung besteht aus: Schokolode, Schokoladenverbindung, hydratisierter Sahne, Fondant und Kombinationen davon.

8. Lutscher gemäß einem der vorhergehenden Ansprüche, wobei das Gesamtgewicht in einem Bereich von 10g bis 20g liegt.

## Revendications

1. Sucette constituée d'une partie comestible, et d'une partie non comestible, la partie comestible comprenant un caramel déposé, un second matériau comestible déposé en plus dudit caramel, la formation d'une garniture, d'un revêtement ou d'une seconde région adjacente audit caramel et la partie non comestible constituée d'une tige, **caractérisée par** une teneur en matière grasse de 15 % à 25 % en poids du caramel et par :
- une première texture dure, lisse qui permet au consommateur de lécher la sucette durant la première partie de la consommation ;
- une seconde texture molle qui se développe durant la consommation après ladite texture, et qui permet au consommateur de mordre et de détacher les parties de la sucette durant les étapes suivantes de consommation.

2. Sucette selon la revendication 1 dans laquelle ladite garniture est entièrement contenue à l'intérieur dudit caramel.

3. Sucette selon la revendication 2 dans laquelle ladite tige est positionnée à l'intérieur dudit caramel pour plus de 25 % de la dimension principale dudit caramel et en même temps est positionnée à l'intérieur de ladite garniture pour moins de 50 % de la dimension principale de la garniture.

4. Sucette selon la revendication 3 dans laquelle ladite tige est positionnée à l'intérieur de ladite garniture pour moins de 10 % de la dimension principale de la garniture.

5. Sucette selon l'une quelconque des revendications précédentes dans laquelle ladite tige est une tige solide.

6. Sucette selon l'une quelconque des revendications précédentes dans laquelle ledit caramel est **caractérisé par** une teneur en eau de 5 % à 11 % en poids du caramel.

7. Sucette selon la revendication 1 dans laquelle ladite garniture est constituée de : chocolat, composé chocolaté, crème hydratée, fondant et leurs combinaisons.

8. Sucette selon l'une quelconque des revendications précédentes dans laquelle le poids total s'étend de 10 g à 20 g.
